# EUROPÄISCHE PATENTSCHRIFT

(11) **EP 2 406 515 B1**
(45) Veröffentlichungstag und Bekanntmachung des Hinweises auf die Patenterteilung: **16.01.2013**
(21) Anmeldenummer: 10704573.4
(22) Anmeldetag: 19.02.2010
(51) Int. Cl.: F16D 23/12

(54) **GEREGELTE AXIALE VORSPANNEINHEIT**
REGULATED AXIAL PRE-TENSIONING UNIT
UNITE DE PRECONTRAINTE AXIALE A REGLAGE

(30) Priorität: 13.03.2009 DE 102009013121
(43) Veröffentlichungstag der Anmeldung: 18.01.2012
(73) Patentinhaber: Schaeffler Technologies AG & Co. KG, 91074 Herzogenaurach (DE)
(72) Erfinder: SMETANA, Tomas, 91074 Herzogenaurach (DE); RADINGER, Norbert, 90475 Nürnberg (DE); WIESINGER, Fritz, 91126 Kammerstein (DE)
(86) Internationale Anmeldenummer: PCT/EP2010/052124
(87) Internationale Veröffentlichungsnummer: WO 2010/102893

(56) Entgegenhaltungen:
- WO-A1-2009/068403
- WO-A1-2010/000674
- DE-A1- 10 321 659
- DE-A1- 10 348 312
- DE-A1-102007 004 712
- DE-B3-102005 053 555
- DE-B4- 10 262 144
- FR-A1- 2 647 174
- US-A- 3 163 478

## Beschreibung

Die Erfindung betrifft eine geregelte axiale Vorspanneinheit. Diese Vorspanneinheit besteht aus einer ersten Rampenscheibe und einer zweiten Rampenscheibe, die jeweils mehrere Rampenkonturen ausgebildet haben. Ferner ist ein ringförmiger Käfig vorgesehen, der mehrere Wälzkörper trägt und zwischen der ersten Rampenscheibe und der zweiten Rampenscheibe eingebracht ist. Eine der beiden Rampenscheiben ist mit einem Zahnsegment versehen. Die andere Rampenscheibe ist entsprechend mit einer Verdrehsicherung versehen.

### Hintergrund der Erfindung

Derartige Vorspanneinheiten finden bei Getrieben von Kraftfahrzeugen Verwendung, um insbesondere die Betätigung einer Reibungskupplung im Antriebsstrang eines Kraftfahrzeugs zu ermöglichen.

Die deutsche Patentschrift DE 10 2005 053 555 B3 offenbart eine Axialverstellvorrichtung in Form einer Kugelrampenanordnung. Die Axialverstellvorrichtung umfasst zwei auf einer gemeinsamen Achse zentrierte Scheiben, von denen eine axial abgestützt ist und die andere verschiebbar ist und von denen zumindest drehend antreibbar ist. Die beiden Scheiben weisen jeweils auf ihren zueinander zugewandten Stirnflächen eine gleich große Vielzahl in Umfangsrichtung verlaufenden Kugelrillen auf. Die beiden Scheiben werden also mit Kugeln als Wälzkörper gelagert.

Die U.S.-Patentschrift 5,485,904 offenbart ebenfalls eine Vorspanneinheit, deren Rampenscheiben mittels Kugeln als Wälzkörper gegeneinander verdrehbar sind.

Ebenso offenbart das U.S.-Patent 5,620,072 eine Vorspanneinheit für eine Lamellenkupplung, deren Rampenscheiben ebenfalls mit Kugeln als Wälzkörper gegeneinander verdrehbar angeordnet sind.

Die deutsche Patentschrift DE 10 2004 015 271 B4 offenbart eine Drehmoment-Übertragungsvorrichtung. Hier sind die Wälzkörper und das Axiallager auf einem Teilkreis angebracht, der den gleichen Durchmesser aufweist. Als Wälzkörper werden Kugeln verwendet.

Die oben beschriebenen Vorspanneinheiten sind ungeregelte Vorspanneinheiten mit Kugeln bzw. mit Rollen. Die Axialkraft derartiger Vorspanneinheiten hängt vom abgenommenen Drehmoment ab und ist nicht aktiv regelbar. Die ungeregelten Vorspanneinheiten finden z. B. in der Allrad-Zuschaltung Verwendung. In Differenzialen mit Torque-Vectoring bzw. in bestimmten Verteilergetrieben wird das Drehmoment dagegen gezielt zwischen den Rädern bzw. zwischen der Vorder- und Hinterachse aktiv gesteuert. In diesem Fall hat eine der Rampenscheiben eine Außenverzahnung, die mittels ein oder mehrerer Stimradstufen bzw. eines Schneckenantriebs elektromotorisch angesteuert wird.

Analog zur Allrad-Zuschaltung werden die Rampenscheiben samt Verzahnung massiv hergestellt. Die möglichen Herstellungsverfahren sind Sintern, Guss oder Schmiedeteil. Die Vorspannkupplung setzt sich aus mehreren Einzelteilen zusammen, was letztendlich die Montage und das Handling erschwert.

DE10262144 B4 *zeigt eine axiale Vorspanneinheit mit zwei koaxialen relativ zueinander verdrehbaren Rampenscheiben, in die axial tiefenveränderlich Kugelrillen eingebracht sind. In den Kugelrillen sind axial zwischen den Rampenscheiben Kugeln geführt und mittels eines Käfigs gehalten. Eine der Rampenscheiben weist eine Verzahnung für den Stellantrieb auf. Die andere der Rampenscheiben ist mit einem Ansatz versehen, über den die Scheibe auf einem Stift gegenüber einem Gehäuse verdrehgesichert ist. Beim Verdrehen der Rampenscheibe über die Verzahnung steigen die Kugeln axial entweder in den Kugelrillen auf oder ab, wodurch die Rampenscheiben voneinander weg oder aufeinander zu axial bewegt werden.*

DE10348312 *zeigt eine axiale Vorspanneinheit, mit zwei koaxialen relativ zueinander verdrehbaren Scheiben, welche aus Blech mittels spanloser Umformtechnik hergestellt sind. In die Rampenscheiben sind axial tiefenveränderliche Kugelrillen geprägt, in denen axial zwischen den Scheiben Kugeln geführt sind. Durch Verdrehen der Rampenscheibe gegeneinander steigen die Kugeln, bis diese an Axialanschlägen anschlagen, axial entweder in den Kugelrillen auf oder ab, wodurch die Rampenscheiben voneinander weg oder aufeinander zu axial bewegt werden.*

Der Erfindung liegt die Aufgabe zugrunde, eine geregelte axiale Vorspanneinheit zu schaffen, mit der eine Kostenreduzierung erzielbar ist, dass das Gewicht und der für die axiale Vorspanneinheit erforderliche Bauraum reduziert ist und eine Vereinfachung des Handlings und der Montage der axialen Vorspanneinheit erheblich vereinfacht ist.

Die obige Aufgabe wird durch eine geregelte axiale Vorspanneinheit gelöst, die die Merkmale des Anspruchs 1 umfasst.

Die erfindungsgemäße geregelte axiale Vorspanneinheit besteht unter anderem aus einer ersten Rampenscheibe und einer zweiten Rampenscheibe, die jeweils mehrere Rampenkonturen ausgebildet haben. Ebenso ist ein ringförmiger Käfig vorgesehen, der mehrere Wälzkörper trägt und zwischen der ersten Rampenscheibe und der zweiten Rampenscheibe eingebracht ist. Eine der beiden Rampenscheiben ist mit einem Zahnsegment versehen. Die andere der beiden Rampenscheiben ist mit einer Verdrehsicherung versehen. Zumindest die erste Rampenscheibe, die zweite Rampenscheibe und der Käfig sind mittels spanloser Umformtechnik hergestellt. *Die erste Rampenscheibe und die zweite Rampenscheibe sind topfförmig ausgebildet und besitzen jeweils eine zentrale Öffnung und jeweils eine Wand, die am Außenumfang der ersten und der zweiten Rampenscheibe ausgeformt ist.* Die erste Rampenscheibe und die zweite Rampenscheibe haben am jeweiligen Außenumfang eine Anschlagsicherung für jeweilige Endpositionen integral ausgeformt.

Der ringförmige Käfig hat entsprechend der Anzahl der zu halternden Wälzkörper Taschen ausgebildet. Am Innendurchmesser des ringförmigen Käfigs sind mehrere Haltelappen ausgeformt, die beidseitig senkrecht vom ringförmigen Käfig abstehen.

Die Verdrehsicherung ist an die eine der beiden Rampenscheiben angeschweißt, um diese drehfest mit einem Gehäuse des Getriebes zu verbinden. Die andere der beiden Rampenscheiben ist mit einem aus Blech umgeformten Zahnsegment versehen, das eine eingewalzte Verzahnung ausgebildet hat. Das Zahnsegment ist an die erste Rampenscheibe angeschweißt und die eingewalzte Verzahnung ist eine Schrägverzahnung. Die Begriffe erste und zweite Rampenscheibe bzw. die eine und die andere Rampenscheibe sollen nicht als eine Beschränkung der Erfindung aufgefasst werden. Sie dienen lediglich der Beschreibung der Erfindung und der zugehörigen Zeichnungen.

Die in den beiden Rampenscheiben ausgebildeten Rampenkonturen besitzen die Form einer einfachen Rampe. Die Rampenkontur hat einen Winkel von kleiner oder gleich 5° ausgebildet.

Die erste Rampenscheibe ist mit einem Distanzelement versehen, an das sich ein Axialnadellager anschließt. Ebenso ist die zweite Rampenscheibe mit einem Distanzelement versehen, an das sich ein anderes Axialnadellager anschließt. Das andere Distanzelement, das auf die zweite Rampenscheibe folgt, ist C-förmig ausgebildet. In dem durch die C-förmige Gestalt gebildeten Freiraum ist eine Öldurchführung eingepasst, wobei die Breite der Öldurchführung der Breite des Distanzelements entspricht.

Die erste Rampenscheibe und die zweite Rampenscheibe sind topfförmig ausgebildet und besitzen jeweils eine zentrale Öffnung und jeweils eine Wand, die am Außenumfang der ersten und der zweiten Rampenscheibe ausgeformt ist. Die erste Rampenscheibe besitzt einen etwas größeren Außendurchmesser als die zweite Rampenscheibe, so dass die topfförmige zweite Rampenscheibe zum Teil in die topfförmige erste Rampenscheibe eingreift. Die Haltelappen des Käfigs greifen am Innendurchmesser der Öffnung der ersten Rampenscheibe und der zweiten Rampenscheibe an. Dadurch werden die erste Rampenscheibe und die zweite Rampenscheibe zusammengehalten.

Der Käfig, der die erste Rampenscheibe und die zweite Rampenscheibe zusammen hält, das sich an die erste Rampenscheibe anschließende Distanzelement, das sich an die zweite Rampenscheibe anschließende Distanzelement mit den jeweiligen Axialnadellagern und in Verbindung mit der Verdrehsicherung, dem Zahnsegment und der Öldurchführung stellen eine vormontierte Einheit dar. Das der ersten Rampenscheibe zugeordnete Distanzelement ist topfförmig ausgebildet. Über einen Außendurchmesser des topfförmigen Distanzelements wird die vormontierte Einheit im eingebauten Zustand im Gehäuse des Getriebes geführt.

Im Folgenden sollen Ausführungsbeispiele die Erfindung und ihre Vorteile anhand der beigefügten Figuren näher erläutern.
- Figur 1: zeigt eine Explosionsdarstellung der erfindungsgemäßen Vorspanneinheit.
- Figur 2: zeigt eine Seitenansicht der geregelten axialen Vorspanneinheit, die für den Einbau in ein Getriebe eine vormontierte Einheit ist.
- Figur 3: zeigt eine Schnittansicht durch die geregelte axiale Vorspanneinheit.
- Figur 4: zeigt eine perspektivische Ansicht der geregelten axialen Vorspanneinheit in der nicht betätigten Stellung.
- Figur 5: zeigt eine perspektivische Ansicht der geregelten axialen Vorspanneinheit in der betätigten Ansicht.
- Figur 6: zeigt eine perspektivische Ansicht des Käfigs, der die erste Rampenscheibe und die zweite Rampenscheibe zusammenhält.
- Figur 7: zeigt eine Seitenansicht des Käfigs.
- Figur 8: zeigt eine Schnittansicht durch die axiale Vorspanneinheit, bei der lediglich die erste Rampenscheibe und die zweite Rampenscheibe montiert sind.
- Figur 9: zeigt eine Draufsicht auf eine der Rampenscheiben.
- Figur 10: zeigt eine Draufsicht auf die geregelte axiale Vorspanneinheit, bei der lediglich die erste Rampenscheibe und die zweite Rampenscheibe montiert ist und das Zahnsegment nicht betätigt ist.
- Figur 11: zeigt die Ansicht aus Figur 10, bei der das Zahnsegment betätigt ist.
- Figur 12: zeigt eine Seitenansicht der komplett montierten Einheit der geregelten axialen Vorspanneinheit, wobei das Zahnsegment betätigt ist.
- Figur 13: zeigt eine perspektivische Ansicht der geregelten axialen Vorspanneinheit und den Einbau dieser geregelten axialen Vorspanneinheit in ein Getriebe.
- Figur 14: zeigt eine Schnittansicht des Einbaus der geregelten axialen Vorspanneinheit in das Getriebe.

Für gleiche oder gleich wirkende Elemente der Erfindung werden identische Bezugszeichen verwendet. Ferner werden der Übersicht halber nur Bezugszeichen in den einzelnen Figuren dargestellt, die für die Beschreibung der jeweiligen Figur erforderlich sind. Die dargestellten Ausführungsformen stellen lediglich Beispiele dar, wie die erfindungsgemäße Vorrichtung ausgestaltet sein kann und stellen folglich keine abschließende Begrenzung der Erfindung dar.

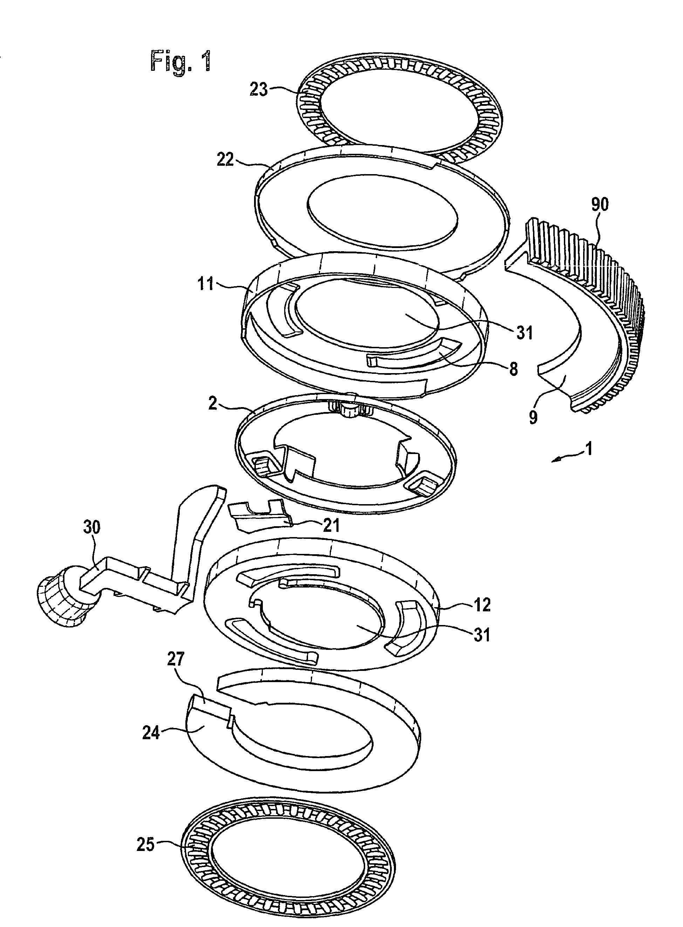

**Figur 1** zeigt eine perspektivische Explosionsdarstellung der geregelten axialen Vorspanneinheit 1. Es ist ein Käfig 2 vorgesehen, der zwischen einer ersten Rampenscheibe 11 und einer zweiten Rampenscheibe 12 eingebracht wird. Dieser Käfig 2 trägt mehrere Wälzkörper 3, die an Rampen 8 auf- und/oder absteigen, wobei die Rampen 8 an der Innenfläche der ersten Rampenscheibe 11 bzw. der zweiten Rampenscheibe 12 ausgebildet sind. Die erste Rampenscheibe 11 und die zweite Rampenscheibe 12 sind jeweils topfförmig ausgebildet. Sie besitzen eine zentrale Öffnung 31 und jeweils eine Wand 32.

Die erste Rampenscheibe 11 ist mit einem Zahnsegment 9 versehen. Das Zahnsegment 9 kann mittels einer Schweißverbindung mit der ersten Rampenscheibe 11 verbunden werden. Das Zahnsegment 9 wird durch Blechumformung hergestellt. In das Zahnsegment 9 ist eine Verzahnung 90 eingewalzt. Ferner ist die zweite Rampenscheibe mit einer Verdrehsicherung 21 versehen. Diese Verdrehsicherung wird ebenfalls an die zweite Rampenscheibe 12 angeschweißt. Über die Verdrehsicherung besteht somit eine feste Verbindung zwischen der zweiten Rampenscheibe und dem Gehäuse 70 des Getriebes 71.

An die erste Rampenscheibe 11 schließt sich ein Distanzelement 22 an, welches mit einem Axialnadellager 23 auf der Außenseite versehen ist. Ebenfalls schließt sich an die zweite Rampenscheibe 12 ein Distanzelement 24 an, dass ebenfalls mit einem Axialnadellager 25 versehen ist. Das sich an die zweite Rampenscheibe 12 anschließende Distanzelement 24 ist C-förmig ausgebildet. In den Freiraum 27 kann eine Öldurchführung 30 eingepasst werden. Dabei entspricht die Breite der Öldurchführung 30 der Breite des Distanzelements 24.

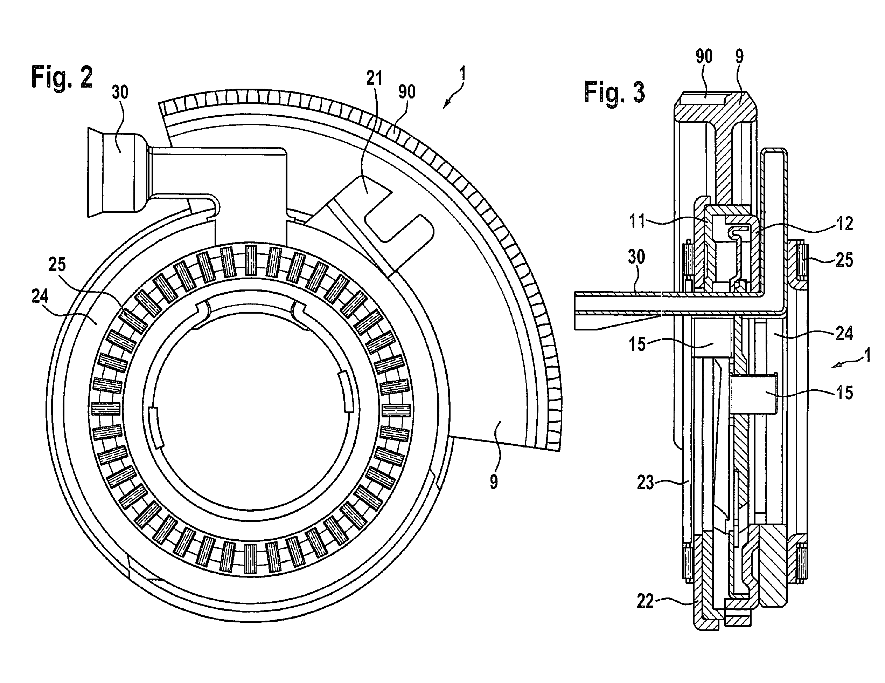

**Figur 2** zeigt eine Draufsicht auf die zusammengebaute geregelte axiale Vorspanneinheit 1. Das Zahnsegment 9, welches in dieser Ansicht nicht betätigt ist, befindet sich in einer Stellung, dass die Verdrehsicherung 21 direkt vor dem Zahnsegment 9 liegt. Die Öldurchführung 30 ist durch das Distanzelement 24 geführt und von dem Axialnadellager 25 abgedeckt.

**Figur 3** zeigt eine Schnittansicht durch die zusammengebaute geregelte axiale Vorspanneinheit 1. Die geregelte axiale Vorspanneinheit 1 besteht im Wesentlichen aus der ersten Rampenscheibe 11 und der zweiten Rampenscheibe 12, die beide durch den Käfig 2 zusammengehalten sind. Für das Zusammenhalten der ersten Rampenscheibe 11 und der zweiten Rampenscheibe 12 sind am Käfig 2 entsprechende Haltelappen 15 ausgebildet. In der in Figur 3 gezeigten Darstellung ist ersichtlich, dass das Zahnsegment 9 mit der Wand 32 der ersten Rampenscheibe 11 verbunden ist. An die erste Rampenscheibe 11 schließt sich ein Distanzelement 22 an, an das sich wiederum ein Axialnadellager 23 anschließt. Entsprechend schließt sich an die zweite Rampenscheibe 12 ein Distanzelement 24 an, das ebenfalls auf der Außenseite mit einem Axialnadellager 25 versehen ist. Die Öldurchführung 30 ist durch das Distanzelement 24 geführt und greift somit durch die in der ersten Rampenscheibe 11 und der zweiten Rampenscheibe 12 ausgebildete Öffnung hindurch.

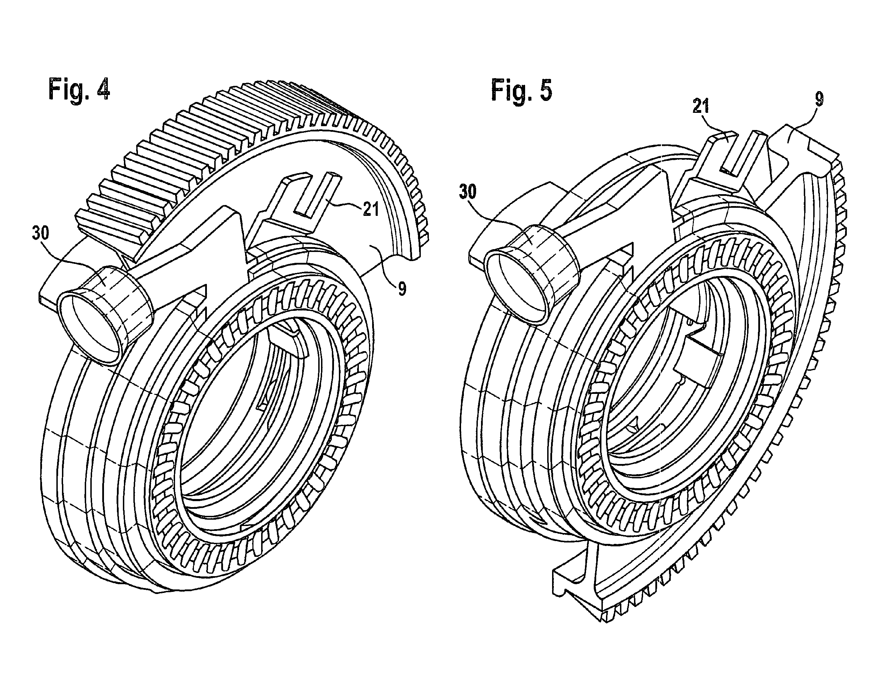

**Figur 4** zeigt eine perspektivische Ansicht der axialen Vorspanneinheit, die als Einheit so montiert und eingebaut werden kann. In der in Figur 4 gezeigten Darstellung ist das Zahnsegment 9 nicht betätigt. Folglich liegt die Verdrehsicherung 21 direkt vor dem Zahnsegment 9. Die Öldurchführung 30 schließt sich ebenfalls an das vordere Ende der Zahnstange 9 an.

**Figur 5** zeigt eine perspektivische Ansicht der axialen Vorspanneinheit, bei der das Zahnsegment 9 betätigt ist. Durch die Betätigung des Zahnsegments 9 kommt es zu einer Verdrehung der ersten Rampenscheibe 11 gegenüber der zweiten Rampenscheibe 12. Die zweite Rampenscheibe 12 kann sich nicht verdrehen, da diese durch die Verdrehsicherung 21 mit dem Gehäuse 70 des Getriebes 71 verbunden ist.

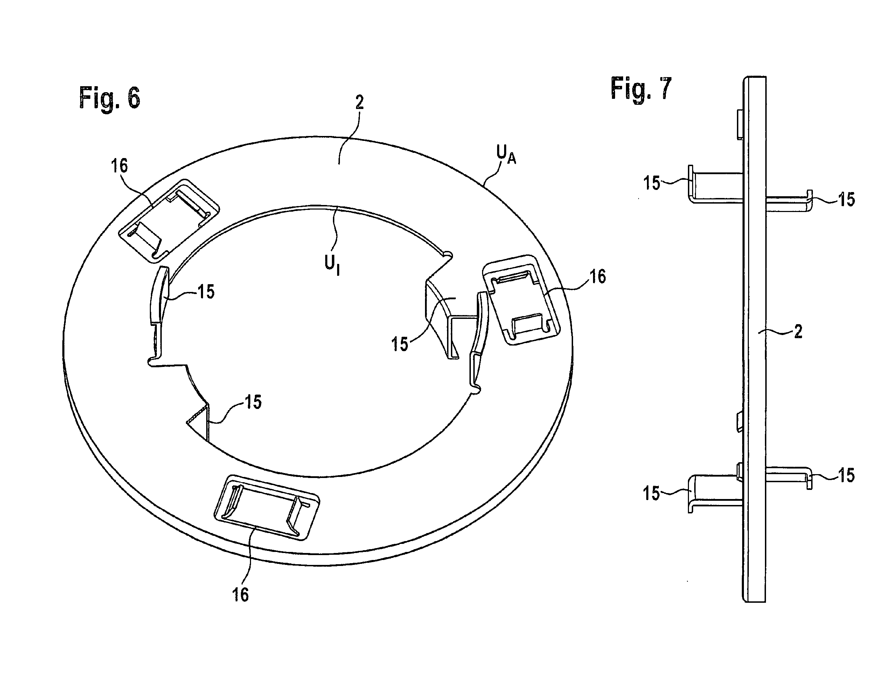

**Figur 6** zeigt eine perspektivische Ansicht des Käfigs 2, der zwischen der ersten Rampenscheibe 11 und der zweiten Rampenscheibe 12 angeordnet ist. Der Käfig 2 hat zum einen die Aufgabe, die Wälzkörper 3 in dafür vorgesehenen Taschen 16 zu halten. Eine weitere Aufgabe des Käfigs 2 ist, die erste Rampenscheibe 11 und die zweite Rampenscheibe 12 miteinander zu verbinden bzw. diese zusammenzuhalten. Hierzu hat der Käfig 2 mehrere Haltelappen 15 am Innenumfang U_{I} ausgebildet.

**Figur 7** zeigt eine Seitenansicht des Käfigs 2. Aus dieser Darstellung geht eindeutig hervor, dass die Haltelappen 15 senkrecht zum Käfig 2 abstehen.

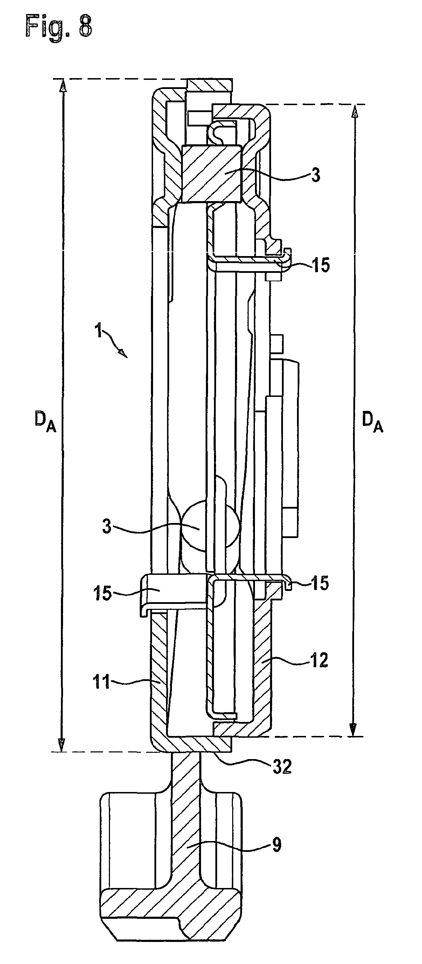

**Figur 8** zeigt eine Schnittansicht einer teilweise zusammengebauten axialen Vorspanneinheit 1. Bei der hier gezeigten Darstellung sind die erste Rampenscheibe 11 und die zweite Rampenscheibe 12 zusammengefügt und werden durch den Käfig 2 zusammengehalten. Wie bereits oben erwähnt, sind die erste Rampenscheibe 11 und die zweite Rampenscheibe 12 topfartig ausgebildet. Die erste Rampenscheibe 11 besitzt einen größeren Außendurchmesser D_{A} als die zweite Rampenscheibe 12. Zwischen der ersten Rampenscheibe 11 und der zweiten Rampenscheibe 12 ist der Käfig 2 angeordnet, der mehrere Wälzkörper 3 trägt. Diese Wälzkörper 3 wirken mit den Rampenkonturen 8 zusammen, die in der ersten Rampenscheibe 11 und der zweiten Rampenscheibe 12 ausgebildet sind. Ebenso ist aus Figur 8 deutlich zu erkennen, wie die Haltelappen 15 des Käfigs 2 mit der ersten Rampenscheibe 11 und der zweiten Rampenscheibe 12 zusammenwirken und diese entsprechend haltern. Die erste Rampenscheibe 11 und die zweite Rampenscheibe 12 sind dabei derart zusammengefügt, dass die zweite Rampenscheibe 12 zumindest teilweise von der topfförmigen ersten Rampenscheibe 11 aufgenommen wird. An der Wand 32 der ersten Rampenscheibe 11 ist das Zahnsegment 9 angebracht. In der Regel wird dieses Zahnsegment 9 mit der Wand 32 der ersten Rampenscheibe 11 verschweißt. Die erste Rampenscheibe 11, die zweite Rampenscheibe 12 und der Käfig 2 sind mittels spanloser Umformtechnik hergestellt.

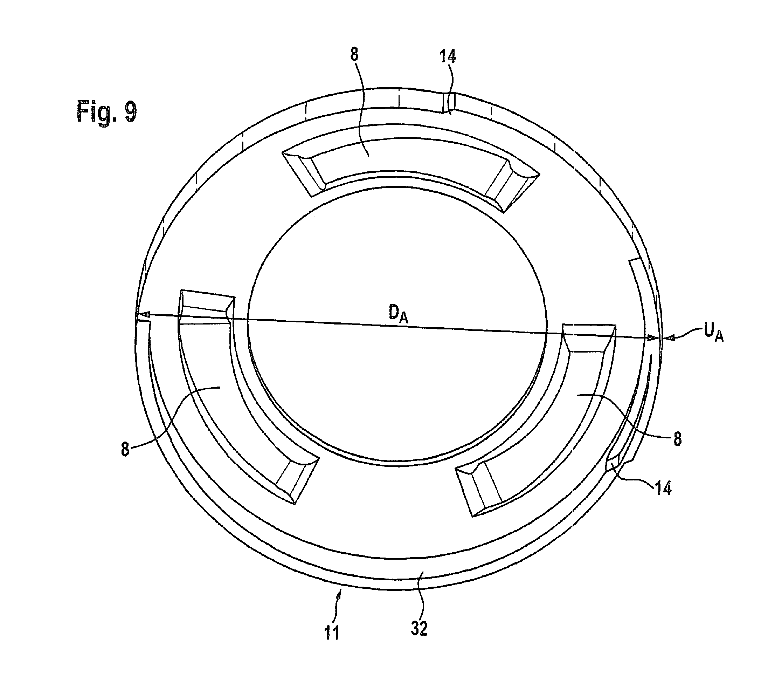

**Figur 9** zeigt eine Ansicht der ersten Rampenscheibe 11. Die erste Rampenscheibe 11 und die zweite Rampenscheibe 12 haben jeweils am Außenumfang U_{A} eine umlaufende Wand 32 ausgebildet. An bestimmten Stellen am Außenumfang U_{A} hat die erste Rampenscheibe 11 mindestens eine Anschlagssicherung 14 ausgebildet. Durch diese Anschlagssicherung ist es möglich, eine Begrenzung der Verdrehung zwischen der ersten Rampenscheibe 11 und der zweiten Rampenscheibe 12 herzustellen. Die Wände der ersten Rampenscheibe 11 und der zweiten Rampenscheibe 12 bilden somit Gleitlager, um Radialkräfte vom Schneckenantrieb (nicht dargestellt) aufzunehmen. Der Schneckenantrieb wirkt mit dem Zahnsegment 9 zusammen, um eine Verdrehung zwischen der ersten Rampenscheibe 11 und der zweiten Rampenscheibe 12 herzustellen. In der ersten Rampenscheibe 11 bzw. der zweiten Rampenscheibe 12 sind die entsprechenden Rampenkonturen 8 ebenfalls durch den spanlosen Umformprozess ausgebildet.

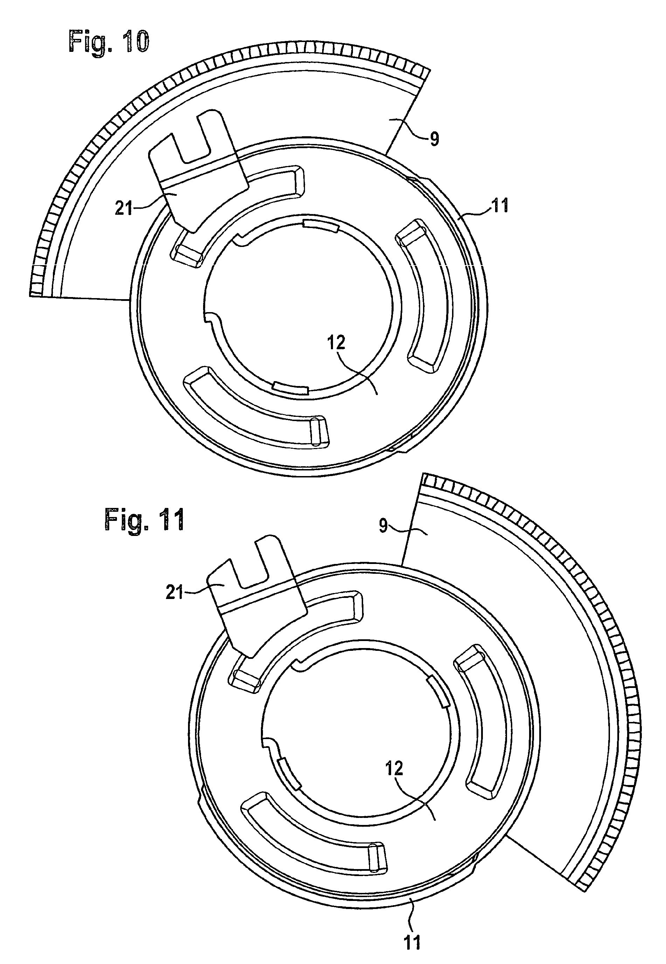

**Figur 10** zeigt eine Seitenansicht der axialen Vorspanneinheit 1, die lediglich aus der ersten Rampenscheibe 11 und der zweiten Rampenscheibe 12 besteht, welche durch den Käfig 2 zusammengehalten sind. Zusätzlich ist, wie bereits mehrfach erwähnt, mit der ersten Rampenscheibe 11 das Zahnsegment 9 verbunden und mit der zweiten Rampenscheibe 12 ist die Verdrehsicherung 21 verbunden.

Bei der Darstellung in **Figur 11** ist das Zahnsegment 9 betätigt. Hier zeigt sich ganz deutlich, dass sich die zweite Rampenscheibe 12 gegenüber der in Figur 10 gezeigten Darstellung nicht bewegt hat. Dies wird dadurch erreicht, da die Verdrehsicherung 21 die zweite Rampenscheibe 12 gegen eine Verdrehung hemmt.

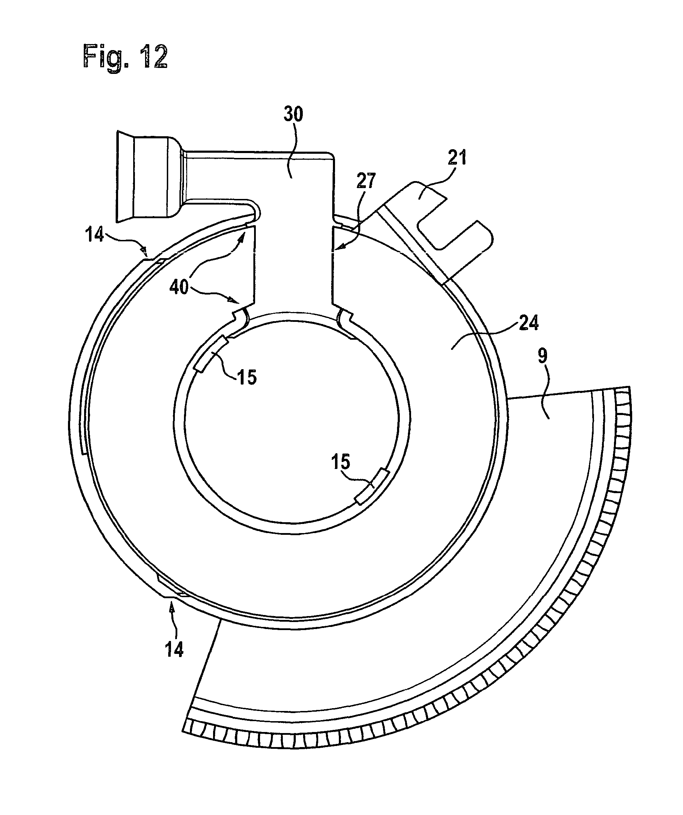

**Figur 12** zeigt die komplett zusammengebaute geregelte axiale Vorspanneinheit 1 in der Seitenansicht. Hier fehlen lediglich die Axialnadellager. Das Zahnsegment 9 ist betätigt, was bedeutet, dass die erste Rampenscheibe 11 gegenüber der zweiten Rampenscheibe 12 verdreht ist. In der in Figur 12 gezeigten Darstellung ist eindeutig die Art des Einbaus der Öldurchführung 30 zu erkennen. Die Öldurchführung 30 hat mehrere Vorsprünge 40 ausgebildet, die in entsprechende Ausformungen der axialen Vorspanneinheit 1 zusammenwirken, um somit eine Sicherung der Befestigung der Öldurchführung 30 zu gewährleisten. Die Öldurchführung 30 ist im C-förmigen Distanzelement 24 eingesetzt und fügt sich in den im C-förmigen Distanzelement 24 ausgebildeten Freiraum 27 ein.

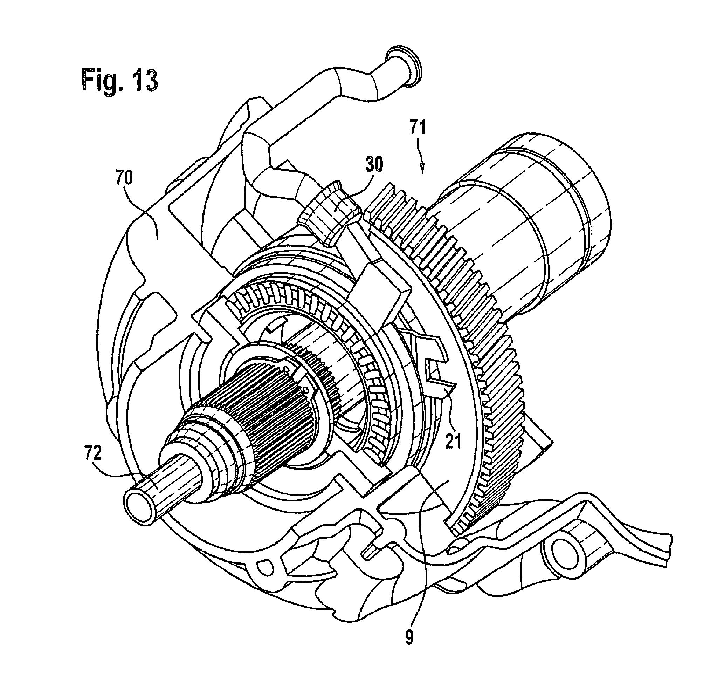

**Figur 13** zeigt eine perspektivische Ansicht des Einbaus der axialen Vorspanneinheit 1 in ein Getriebe 71. Das Getriebe 71 umfasst ein Gehäuse 70, mit dem die Verdrehsicherung 21 in geeigneter Weise verbunden wird. Die Antriebswelle 72 greift durch die in der axialen Vorspanneinheit 1 ausgebildete Öffnung 31 hindurch. Diese Öffnung ist im Käfig 2, der ersten Rampenscheibe 11, der zweiten Rampenscheibe 12, dem Distanzelement 22, dem Distanzelement 24, dem Axialnadellager 23 und dem Axialnadellager 25 ausgebildet.

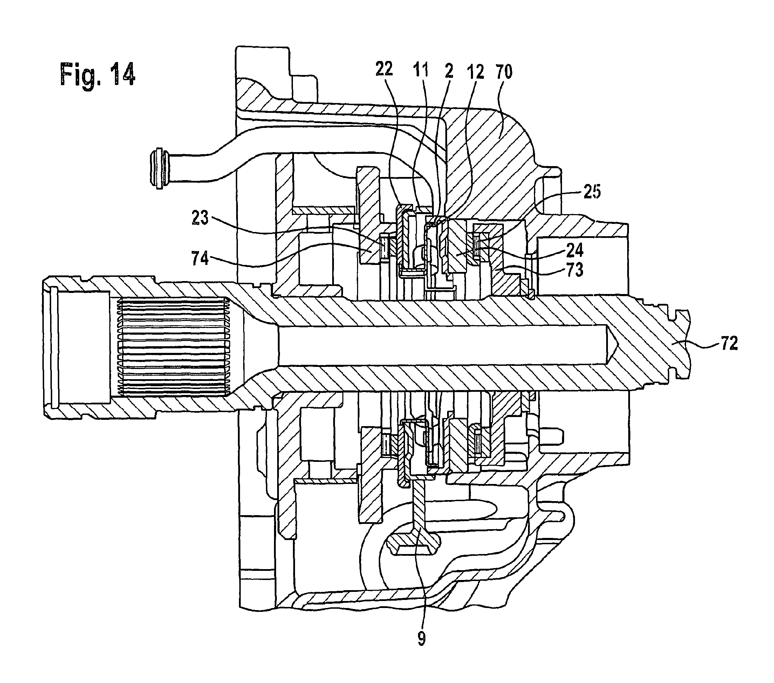

**Figur 14** zeigt eine Seitenansicht der in einem Getriebe 71 eingebauten axialen Vorspanneinheit 1. Das Axialnadellager 25 liegt dabei an einer Abstützplatte 73 an. Durch Betätigung des Zahnsegments 9 kann die erste Rampenscheibe 11 gegenüber der zweiten Rampenscheibe 12 verdreht werden. Bei der Verdrehung steigen somit die Wälzlager 3, welche im Käfig 2 gehalten sind, auf den Rampenkonturen 8 auf- und/oder ab. Durch die Betätigung des Zahnsegments ändert sich somit der axiale Abstand zwischen der ersten Rampenscheibe 11 und der zweiten Rampenscheibe 12. Die erste Rampenscheibe 11 wirkt somit über das Distanzelement 22 und das Axialnadellager 23 auf eine Druckplatte 74. Über die Druckplatte 74 wird letztendlich ein Element innerhalb des Getriebes 71 betätigt.

Die Erfindung wurde unter Bezugnahme auf eine bevorzugte Ausführungsform beschrieben. Es ist für einen Fachmann selbstverständlich, dass Änderungen und Abweichungen der Erfindung gemacht werden können, ohne dabei den Schutzbereich der nachstehenden Ansprüche zu verlassen.

## Patentansprüche

1. Geregelte axiale Vorspanneinheit (1) bestehend aus einer ersten Rampenscheibe (11) und einer zweiten Rampenscheibe (12), die jeweils mehrere Rampenkonturen (8) ausgebildet haben; einem ringförmigen Käfig (2), der mehrere Wälzkörper (3) trägt und zwischen der ersten Rampenscheibe (11) und der zweiten Rampenscheibe (12) eingebracht ist, wobei eine der beiden Rampenscheiben (11, 12) mit einem Zahnsegment (9) versehen ist und wobei die andere der beiden Rampenscheiben (11, 12) mit einer Verdrehsicherung (21) versehen ist, zumindest die erste Rampenscheibe (11), die zweite Rampenscheibe (12) und der Käfig (2) mittels spanloser Umformtechnik hergestellt sind, **dadurch gekennzeichnet, dass** dadurch die erste Rampenscheibe (11) und die zweite Rampenscheibe (12) *topfförmig ausgebildet sind, und jeweils eine zentrale Öffnung (31) und* am Außenumfang (U_{A}) der ersten und der zweiten Rampenscheibe (11, 12) *eine umlaufende Wand (32)* ausgeformt haben und dass ebenfalls dadurch die erste Rampenscheibe (11) und die zweite Rampenscheibe (12) am jeweiligen Außenumfang (U_{A}) eine Anschlagssicherung (14) für jeweilige Endpositionen integral ausgeformt hat.

2. Geregelte axiale Vorspanneinheit (1) nach Anspruch 1, **dadurch gekennzeichnet, dass** der ringförmige Käfig (2) entsprechend der Anzahl der zu halternden Wälzkörper (3) Taschen (16) ausgebildet hat und dass der ringförmige Käfig (2) an einem Innendurchmesser (U_{I}) mehrere Haltelappen (15) ausgeformt hat, die beidseitig senkrecht vom ringförmigen Käfig (2) abstehen,

3. Geregelte axiale Vorspanneinheit (1) nach Anspruch 1, **dadurch gekennzeichnet, dass** die Verdrehsicherung (21) an die eine der beiden Rampenscheiben (11, 12) angeschweißt ist, um diese drehfest mit einem Gehäuse (20) zu verbinden.

4. Geregelte axiale Vorspanneinheit (1) nach Anspruch 1, **dadurch gekennzeichnet, dass** die *die mit dem Zahnsegment (9) versehene Rampenscheibe (11, 12)* der beiden Rampenscheiben (11, 12) mit einem aus Blech umgeformten Zahnsegment (9) versehen ist, das eine eingewalzte Verzahnung (90) ausgebildet hat.

5. Geregelte axiale Vorspanneinheit (1) nach Anspruch 4, **dadurch gekennzeichnet, dass** das Zahnsegment (9) an die erste Rampenscheibe (11) angeschweißt ist.

6. Geregelte axiale Vorspanneinheit (1) nach Anspruch 4, **dadurch gekennzeichnet, dass** die eingewalzte Verzahnung (90) eine Schrägverzahnung ist.

7. Geregelte axiale Vorspanneinheit (1) nach einem der Ansprüche 1 bis 6, **dadurch gekennzeichnet, dass** die in den beiden Rampenscheiben (11, 12) ausgebildeten Rampenkonturen (8) die Form einer einfachen Rampe besitzen.

8. Geregelte axiale Vorspanneinheit (1) nach Anspruch 7, **dadurch gekennzeichnet, dass** die Rampenkontur (8) einen Winkel von kleiner oder gleich 5° ausgebildet hat.

9. Geregelte axiale Vorspanneinheit (1) nach einem der Ansprüche 1 bis 8, **dadurch gekennzeichnet, dass** die erste Rampenscheibe (11) mit einem Distanzelement (22) versehen ist, an das sich ein Axialnadellager (23) anschließt.

10. Geregelte axiale Vorspanneinheit (1) nach einem der Ansprüche 1 bis 8, **dadurch gekennzeichnet, dass** die zweite Rampenscheibe (12) mit einem Distanzelement (24) versehen ist, an das sich ein Axialnadellager (25) anschließt.

11. Geregelte axiale Vorspanneinheit (1) nach Anspruch 10, **dadurch gekennzeichnet, dass** das Distanzelement (24), das auf die zweite Rampenscheibe (12) folgt, an C-förmig ausgebildet ist, wobei in dem Freiraum (27) eine Öldurchführung (30) eingepasst ist, wobei die Breite der Öldurchführung (30) der Breite des Distanzelements (24) entspricht.

12. Geregelte axiale Vorspanneinheit (1) nach Anspruch 1, **dadurch gekennzeichnet, dass** die erste Rampenscheibe (11) einen etwas größeren Außendurchmesser (D_{A}) besitzt als die zweite Rampenscheibe (12), so dass die topfförmige zweite Rampenscheibe (12) zum Teil in die topfförmige erste Rampenscheibe (11) eingreift.

13. Geregelte axiale Vorspanneinheit (1) nach Anspruch *1 oder 12,* **dadurch gekennzeichnet, dass** die Haltelappen (15) des Käfigs (2) am Innendurchmesser (DI) der Öffnung (31) der ersten Rampenscheibe (11) und der zweiten Rampenscheibe (12) angreifen und so die erste Rampenscheibe (11) und die zweite Rampenscheibe (12) zusammenhalten.

14. Geregelte axiale Vorspanneinheit (1) nach einem der Ansprüche 1 bis 13, **dadurch gekennzeichnet, dass** der Käfig (2), der die erste Rampenscheibe (11) und die zweite Rampenscheibe (12) zusammenhält, das sich an die ersten Rampenscheibe (11) anschließende Distanzelement (22), das sich an die zweite Rampenscheibe (12) anschließende Distanzelement (24) mit den jeweiligen Axialnadellagern (23, 25) und in Verbindung mit der Verdrehsicherung (21), dem Zahnsegment (9) und der Öldurchführung (30) eine vormontierte Einheit bilden.

15. Geregelte axiale Vorspanneinheit (1) nach Anspruch *14*, **dadurch gekennzeichnet, dass** das der ersten Rampenscheibe (11) zugeordnete Distanzelement (22) topfförmig ausgebildet ist und einen Außendurchmesser (D_{A}) aufweist, über den die vormontierte Einheit im eingebauten Zustand im Gehäuse geführt ist.

## Claims

1. Regulated axial pretensioning unit (1) consisting of a first ramp disc (11) and of a second ramp disc (12) which in each case have a plurality of ramp contours (8) formed, and of an annular cage (2) which carries a plurality of rolling bodies (3) and is introduced between the first ramp disc (11) and the second ramp disc (12), one of the two ramp discs (11, 12) being provided with a toothed segment (9) and the other of the two ramp discs (11, 12) being provided with an anti-twist device (21), at least the first ramp disc (11), the second ramp disc (12) and the cage (2) being produced by means of non-cutting forming technology, **characterized in that**, as a result, the first ramp disc (11) and the second ramp disc (12) are of pot-shaped form, and have shaped out of them in each case a central orifice (31) and, on the outer circumference (U_{A}) of the first and of the second ramp disc (11, 12), a peripheral wall (32), and **in that**, likewise as a result, the first ramp disc (11) and the second ramp disc (12) have shaped out of them integrally on the respective outer circumference (U_{A}) a stop device (14) for the respective end positions.

2. Regulated axial pretensioning unit (1) according to Claim 1, **characterized in that** the annular cage (2) has pockets (16) formed according to the number of rolling bodies (3) to be held, and **in that** the annular cage (2) has shaped out of it on an inside diameter (U_{I}) a plurality of holding tabs (15) which project perpendicularly from the annular cage (2) on both sides.

3. Regulated axial pretensioning unit (1) according to Claim 1, **characterized in that** the anti-twist device (21) is welded to one of the two ramp discs (11, 12) in order to connect this fixedly in terms of rotation to a housing (20).

4. Regulated axial pretensioning unit (1) according to claim 1, **characterized in that** that ramp disc (11, 12) of the two ramp discs (11, 12) which is provided with the toothed segment (9) is provided with a toothed segment (9) which is formed from sheet metal and which has a rolled-in toothing (90) formed.

5. Regulated axial pretensioning unit (1) according to Claim 4, **characterized in that** the toothed segment (9) is welded to the first ramp disc (11).

6. Regulated axial pretensioning unit (1) according to Claim 4, **characterized in that** the rolled-in toothing (90) is a helical toothing.

7. Regulated axial pretensioning unit (1) according to one of Claims 1 to 6, **characterized in that** the ramp contours (8) formed in the two ramp discs (11, 12) are in the shape of a simple ramp.

8. Regulated axial pretensioning unit (1) according to Claim 7, **characterized in that** the ramp contour (8) forms an angle of less than or equal to 5°.

9. Regulated axial pretensioning unit (1) according to one of Claims 1 to 8, **characterized in that** the first ramp disc (11) is provided with a spacer element (22) which is adjoined by an axial needle bearing (23).

10. Regulated axial pretensioning unit (1) according to one of Claims 1 to 8, **characterized in that** the second ramp disc (12) is provided with a spacer element (24) which is adjoined by an axial needle bearing (25).

11. Regulated axial pretensioning unit (1) according to Claim 10, **characterized in that** the spacer element (24) which follows the second ramp disc (12) is of C-shaped form, an oil leadthrough (30) being fitted in the free space (27), the width of the oil leadthrough (30) corresponding to the width of the spacer element (24).

12. Regulated axial pretensioning unit (1) according to Claim 1, **characterized in that** the first ramp disc (11) possesses a somewhat larger outside diameter (D_{A}) than the second ramp disc (12), so that the pot-shaped second ramp disc (12) engages partially into the pot-shaped first ramp disc (11).

13. Regulated axial pretensioning unit (1) according to Claim 1 or 12, **characterized in that** the holding tabs (15) of the cage (2) engage on the inside diameter (D_{I}) of the orifice (31) of the first ramp disc (11) and of the second ramp disc (12) and thus hold the first ramp disc (11) and the second ramp disc (12) together.

14. Regulated axial pretensioning unit (1) according to one of Claims 1 to 13, **characterized in that** the cage (2) which holds the first ramp disc (11) and the second ramp disc (12) together, the spacer element (22) adjoining the first ramp disc (11) and the spacer element (24) adjoining the second ramp disc (12) form with the respective axial needle bearings (23, 25), and in conjunction with the anti-twist device (21), the toothed segment (9) and the oil leadthrough (30), a preassembled unit.

15. Regulated axial pretensioning unit (1) according to Claim 14, **characterized in that** the spacer element (22) assigned to the first ramp disc (11) is of pot-shaped form and has an outside diameter (D_{A}), via which the preassembled unit is guided in the housing in the installed state.

## Revendications

1. Unité de précontrainte axiale à réglage (1), constituée d'un premier disque à rampe (11) et d'un deuxième disque à rampe (12) qui présentent chacun plusieurs contours de rampe (8) ; d'une cage de forme annulaire (2) qui porte plusieurs corps de roulement (3) et qui est montée entre le premier disque à rampe (11) et le deuxième disque à rampe (12), l'un des deux disques à rampe (11, 12) étant pourvu d'un segment denté (9) et l'autre des deux disques à rampe (11, 12) étant pourvu d'une fixation contre la rotation (21), au moins le premier disque à rampe (11), le deuxième disque à rampe (12) et la cage (2) étant fabriqués par une technique de façonnage sans enlèvement de copeaux, **caractérisée en ce que** le premier disque à rampe (11) et le deuxième disque à rampe (12) sont réalisés en forme de pot et comportent à chaque fois une ouverture centrale (31) et, sur la périphérie extérieure (U_{A}) du premier et du deuxième disque à rampe (11, 12), une paroi périphérique (32), et **en ce que** le premier disque à rampe (11) et le deuxième disque à rampe (12) comportent aussi sur la périphérie extérieure respective (U_{A}) une fixation de butée (14) formée intégralement pour les positions de fin de course respectives.

2. Unité de précontrainte axiale à réglage (1) selon la revendication 1, **caractérisée en ce que** la cage (2) de forme annulaire présente des cavités (16) correspondant au nombre des corps de roulement (3) à retenir et **en ce que** la cage (2) de forme annulaire présente, sur un diamètre intérieur (U_{I}), plusieurs pattes de retenue (15) qui font saillie des deux côtés perpendiculairement à la cage de forme annulaire (2).

3. Unité de précontrainte axiale à réglage (1) selon la revendication 1, **caractérisé en ce que** la fixation contre la rotation (21) est soudée à l'un des deux disques à rampe (11, 12) afin de relier celui-ci de manière solidaire en rotation à un boîtier (20).

4. Unité de précontrainte axiale à réglage (1) selon la revendication 1, **caractérisée en ce que** le disque à rampe (11, 12) pourvu du segment denté (9) parmi les deux disques à rampe (11, 12) est pourvu d'un segment denté (9) façonné en tôle, qui comprend une denture laminée (90).

5. Unité de précontrainte axiale à réglage (1) selon la revendication 4, **caractérisée en ce que** le segment denté (9) est soudé au premier disque à rampe (11).

6. Unité de précontrainte axiale à réglage (1) selon la revendication 4, **caractérisée en ce que** la denture laminée (90) est une denture oblique.

7. Unité de précontrainte axiale à réglage (1) selon l'une quelconque des revendications 1 à 6, **caractérisée en ce que** les contours de rampe (8) réalisés dans les deux disques à rampe (11, 12) possèdent la forme d'une simple rampe.

8. Unité de précontrainte axiale à réglage (1) selon la revendication 7, **caractérisée en ce que** le contour de rampe (8) comprend un angle inférieur ou égal à 5°.

9. Unité de précontrainte axiale à réglage (1) selon l'une quelconque des revendications 1 à 8, **caractérisée en ce que** le premier disque à rampe (11) est muni d'un élément d'espacement (22) auquel se raccorde un palier à aiguilles axial (23).

10. Unité de précontrainte axiale à réglage (1) selon l'une quelconque des revendications 1 à 8, **caractérisée en ce que** le deuxième disque à rampe (12) est muni d'un élément d'espacement (24) auquel se raccorde un palier à aiguilles axial (25).

11. Unité de précontrainte axiale à réglage (1) selon la revendication 10, **caractérisée en ce que** l'élément d'espacement (24) qui suit le deuxième disque à rampe (12) est réalisé en forme de C, un passage d'huile (30) étant ajusté dans l'espace libre (27), la largeur du passage d'huile (30) correspondant à la largeur de l'élément d'espacement (24).

12. Unité de précontrainte axiale à réglage (1) selon la revendication 1, **caractérisée en ce que** le premier disque à rampe (11) possède un diamètre extérieur (D_{A}) un peu plus grand que celui du deuxième disque à rampe (12), de telle sorte que le deuxième disque à rampe (12) en forme de pot vienne en prise en partie dans le premier disque à rampe (11) en forme de pot.

13. Unité de précontrainte axiale à réglage (1) selon la revendication 1 ou 12, **caractérisée en ce que** les pattes de retenue (15) de la cage (2) viennent en prise sur le diamètre intérieur (DI) de l'ouverture (31) du premier disque à rampe (11) et du deuxième disque à rampe (12) et retiennent ensemble ainsi le premier disque à rampe (11) et le deuxième disque à rampe (12).

14. Unité de précontrainte axiale à réglage (1) selon l'une quelconque des revendications 1 à 13, **caractérisée en ce que** la cage (2) qui retient ensemble le premier disque à rampe (11) et le deuxième disque à rampe (12), l'élément d'espacement (22) se raccordant au premier disque à rampe (11), l'élément d'espacement (24) se raccordant au deuxième disque à rampe (12) avec les paliers à aiguilles axiaux (23, 25) respectifs et en association avec la fixation contre la rotation (21), le segment denté (9) et le passage d'huile (30), forment une unité prémontée.

15. Unité de précontrainte axiale à réglage (1) selon la revendication 14, **caractérisée en ce que** l'élément d'espacement (22) associé au premier disque à rampe (11) est réalisé en forme de pot et présente un diamètre extérieur (D_{A}) par le biais duquel l'unité prémontée est guidée dans le boîtier dans l'état installé.
